# EUROPEAN PATENT SPECIFICATION

(11) **EP 1 936 158 B1**
(45) Date of publication and mention of the grant of the patent: **11.07.2012**
(21) Application number: 06127162.3
(22) Date of filing: 22.12.2006
(51) Int. Cl.: F01N 9/00, F02D 41/00, F02D 37/02, F01N 3/08, F02P 9/00, F01N 3/20

(54) **Exhaust gas treatment device regeneration inhibiting fuel combustion in engine cylinder**
Regeneration einer Abgasnachbehandlungsvorrichtung durch unterbinden der Kraftstoffverbrennung in einem Zylinder einer Brennkraftmaschine
Régénération d'un dispositif de traitement des gaz d'échappement empêchant la combustion du carburant dans un cylindre d'un moteur

(43) Date of publication of application: 25.06.2008
(73) Proprietor: Volvo Car Corporation, 405 31 Göteborg (SE)
(72) Inventor: Hermansson, Jonas, 437 32 Lindome (SE); Johnsson, Anders, 416 55 Göteborg (SE); Vollmer, Niklas, 430 31 Åsa (SE)
(74) Representative: Holmberg, Magnus

(56) References cited:
- EP-A- 0 931 923
- EP-A1- 1 174 612
- EP-A2- 0 935 056
- US-A1- 2003 224 907
- US-B2- 6 901 749

## Description

### TECHNICAL FIELD

The present invention relates to a method for an exhaust gas treatment device in an engine system comprising an internal combustion engine comprising at least one cylinder and fuel injection means. The invention also relates to an engine system comprising an internal combustion engine comprising at least one cylinder and fuel injection means, the engine system further comprising an engine control unit adapted to control the fuel injection means.

### BACKGROUND

Modern vehicles are equipped with exhaust gas treatment devices, known as catalytic converters, that convert toxic gases such as hydrocarbons (HC), carbon monoxide (CO) and nitrogen oxides (NOx) into substances such as carbon dioxide (CO2), nitrogen (N2) and water (H2O). A known problem with catalytic converters is that certain substances can remain, for example by physical or chemical adsorption, on internal surfaces of the converters, and reduce the capacity of the converters. Such detrimental adsorption is known as catalytic converter poisoning. For example, fuels, whether gasoline or diesel, for vehicle internal combustion engines, contain a relatively high amount of sulfur, typically depending on in which state or region they are provided. The sulfur creates problems for the operation of the catalyst exhaust gas treatment devices. In the engine combustion process, the sulfur is converted to sulfur oxides (SOx), which adsorbs strongly to internal surfaces of the catalyst and therefore reduces its exhaust gas treatment capacity. This process is often referred to as sulfur poisoning. Sulfur adsorption is particularly strong during low load driving conditions.

A number of catalytic converter regeneration measures to solve this problem have been suggested. It is well known that the catalytic converter can be restored from sulfur poisoning by being exposed to high temperatures.

The patent publication US6161377 suggests heating the catalytic converter by introducing secondary air into the exhaust gases, combined with providing a rich mixture to the cylinders. A disadvantage with this method is that it requires an additional component in the form of an air pump for the introduction of the secondary air. Apart from adding to the complexity and the cost of the engine system, such an air pump creates a noise, which can be disturbing to drivers and passengers in a vehicle in which the pump is installed. Further, a high exhaust gas pressure can give an excessive load to the air pump. Also, since air, according to said patent publication, is injected downstream of the engine, relatively close to the catalytic converter, there is a great risk that the fuel and air will not be fully mixed when reaching the catalytic converter. This reduces the efficiency of the regeneration method, and can cause concentration of fuel, which may result in damage of the catalytic converter.

The patent publication US6901749 discloses, in order to heat the catalytic converter, providing a rich mixture to the engine cylinders combined with adjusting the ignition timing so as to provide a relatively late ignition during the engine cycles. The idea is to allow combustion to continue in the exhaust conduit downstream of the engine cylinders in order to heat the catalytic converter. However, the proposed solution increases the fuel consumption. Also, since the energy for heating the catalytic converter is transported thermally, there are substantial energy losses between the engine and the catalytic converter in the form of temperature decrease. In the case of the catalytic converter being provided relatively far from the engine, the energy losses may be such that no, or an insufficient result is provided by the measure. Also, in the case of the engine system being equipped with an exhaust turbo charger, the energy losses at the delayed ignition regeneration measure are further increased.

Document US 2003/224907 A1 shows first of all, a load-based part cylinder operation of a spark ignition internal combustion engine. A certain part of the cylinders can be deactivated based on a desired engine output. Engine torque is controlled by throttle position and spark timing. It is further proposed, as a standard measure, to reactivate all cylinders if an exhaust temperature increase is required like during a sulfur regeneration. Furthermore, the document proposes that in fact, it is not required to reactivate cylinders to increase exhaust gas temperature. Instead, this can be done by injecting fuel into the deactivated cylinders to supply combustible mixture to the exhaust catalyst. It is thus disclosed to perform a temperature increase mode, like for sulfur regeneration, by injecting fuel into deactivated cylinders. Finally, the document discloses an example of a d sulfur regeneration processing. In this example, sulfur regeneration is performed in a part cylinder operation with rich combustion air fuel ratio in operating cylinders and no fuel injected to inoperative cylinders. The throttle valve is used to control the exhaust air fuel ratio to a target value. A NOx trap temperature is controlled by intake air amount control and spark timing control. The option to inject fuel into the deactivated cylinders is not discussed in the light of this sulfur regeneration process.

Document EP 1 174 612 A1 discloses a diesel particle filter regeneration processing technique taking place in an engine braking state. According to this disclosure, fuel is injected into at least one cylinder at a late timing, so that it is ineffective for torque production and purely serves to supply a combustible mixture to an oxidation catalyst to generate heat for filter regeneration.

### SUMMARY OF THE INVENTION

It is an object of the present invention to provide optimum efficiency of an exhaust gas treatment device.

It is also an object of the present invention to improve regeneration of exhaust gas treatment devices in engine systems with internal combustion engines.

In addition, it is an object of the present invention to minimize the effects of an exhaust gas treatment device regeneration measure on the fuel consumption of a vehic1e provided with the exhaust gas treatment device.

It is a further object of the present invention to provide regeneration of exhaust gas treatment devices in engine systems with a minimal amount of increase in the complexity of the engine system.

These objects are reached with a method as defined in the appended claim 1 and claim 6, respectively.

By allowing fuel injection while combustion is inhibited, the fuel can be thoroughly mixed with air in the cylinder(s). The long transportation after the cylinder(s) allows additional mixture of the air and fuel before reaching the catalytic converter. This provides a homogonous distribution of fuel and air across the lateral extensions of the catalytic converter, in which the mixture is combusted so as to heat the exhaust gas treatment device. The result is a very effective regeneration, and minimizing risks of the regeneration measure causing damage to the catalytic converter. This thorough regeneration is provided simply by use of the fuel injection means, without the need for additional equipment in the engine system.

In addition, since the energy for heating the catalytic converter is transported chemically, i.e. in the air/fuel mixture, and converted to thermal energy in the catalytic converter, there are essentially no energy losses between the engine and the catalytic converter. Thus, the invention provides a very effective regeneration measure, even in a case where the catalytic converter is provided relatively far from the engine, and/or in the case of the engine system being equipped with a exhaust turbo charger.

The use of fuel injection while combustion is inhibited for heating exhaust gas treatment device makes the method advantageous for low load conditions, at which the exhaust gas treatment device temperature is relatively low, and sulfur adsorption in particularly strong.

In addition, in comparison to the regeneration measure involving ignition timing delay as described in said document US6901749, the combustion inhibition exhaust gas treatment device regeneration according to the invention provides has better results regarding fuel consumption, especially at relatively low exhaust gas treatment device temperatures. In addition, the regeneration according to the invention is a powerful measure providing a fast removal of sulfur deposits in the exhaust gas treatment device.

The step of inhibiting combustion comprises controlling ignition means at the cylinder so that combustion is inhibited. Thereby, the method is adapted to spark ignition engines, at which ignition is inhibited during at least one operative cycle of the cylinder(s) during which cycle fuel is allowed to the cylinder, which allows after-combustion of the air/fuel mixture, i.e. allows it to pass the cylinder(s) and the exhaust manifold, and to be combusted in the exhaust gas treatment device,

In addition to ignition inhibition, the combustion inhibition could comprise controlling at least one exhaust valve at at least one of the cylinders into which fuel is allowed so as to reduce or eliminate an increase in pressure in the cylinder. Thereby, a valve control system, in itself known to the person skilled in the art, can be used to open the exhaust valve(s) when at a compression stroke of the cylinder the piston is moving from the bottom dead centre to the top dead centre.

Preferably, the method comprises determining, during the combustion inhibition exhaust gas treatment device regeneration, a value of a control parameter corresponding to, or being related to a requested torque of the engine, the combustion inhibition exhaust gas treatment device regeneration being dependent on the control parameter value determination. Thereby, the combustion inhibition exhaust gas treatment device regeneration can be adjusted, for example as described below, to allow the engine to deliver the torque requested. This makes it possible to quickly respond to torque requests based on accelerator pedal maneuverings,

Preferably, the number of cylinders in which combustion is inhibited is dependent on the control parameter value determination. Thereby, the combustion inhibition exhaust gas treatment device regeneration can be adjusted while being effected, so that it can continue while at the same time torque requirements within certain limits can be met. This is of great advantage in many vehicle operational situations, for example during extended periods of low torque requirements without fuel cut situations. Such conditions can occur for example where the vehicle is traveling for an extended period of time at a relatively low speed on a road with small or no variations in altitude, and the accelerator pedal is kept relatively still. This advantageous embodiment allows for combustion to take place in some of the cylinders to meet torque requirements, while the other cylinders are used for the combustion inhibition exhaust gas treatment device regeneration.

The method comprises determining during the combustion inhibition exhaust gas treatment device regeneration the temperature of the exhaust gas treatment device, and terminating the combustion inhibition exhaust gas treatment device regeneration if it is determined that the temperature of the exhaust gas treatment device is above a predetermined temperature limit value. Thereby, temperatures that are high enough to cause a risk of damaging the catalytic converter can be effectively avoided. It should be noted that avoiding too high catalytic converter temperatures is of outmost importance to prevent premature catalytic converter ageing.

The invention is applicable to engines in which the fuel injection can be controlled individually for each cylinder. The method further comprises determining the temperature of the exhaust gas treatment device, the number of cylinders into which fuel is allowed while combustion is inhibited being dependent on the temperature of the exhaust gas treatment device. Thus, where ignition is inhibited in at least two of the cylinders, fuel can be injected in one or more of the cylinders in which ignition is inhibited, depending on the exhaust gas treatment device temperature. For example, if, during the regeneration, it is desired to decrease the exhaust gas treatment device temperature, the number of cylinders in which fuel is injected while ignition is inhibited can be decreased, and vice versa. Thus, a very advantageous manner of monitoring and controlling the exhaust gas treatment device temperature is provided, which gives excellent possibilities of obtaining a fast and powerful regeneration without the risk of damaging the exhaust gas treatment device.

The method comprises determining the temperature of the exhaust gas treatment device, the amount of fuel allowed into the at least one of the cylinders, in which combustion is inhibited, being controlled in dependence on the temperature of the exhaust gas treatment device. For example, if, during the regeneration, it is desired to decrease the exhaust gas treatment device temperature, the amount of fuel injected while ignition is inhibited can be decreased, and vice versa. The control of the injected amount of fuel provides an advantageous manner of monitoring and controlling the exhaust gas treatment device temperature. This control is used in combination with said control of the number of cylinders into which fuel is allowed while combustion is inhibited. Thereby, the control of the number of cylinders into which fuel is allowed, while combustion is inhibited, can be used as for a coarse temperature control, and the control of the injected amount of fuel, in the respective cylinder in which fuel is allowed, can be used for a fine temperature control. This provides a fast and precise control of the exhaust gas treatment device temperature.

Preferably, the method comprises controlling air flow control means so as to control the combustion in the exhaust gas treatment device during the combustion inhibition exhaust gas treatment device regeneration. By adjusting the air flow, for example based on the flow of fuel injected, it can be secured that a combustible air/fuel mixture is provided to the catalytic converter during the regeneration action. Also, controlling the combustion in the exhaust gas treatment device could comprise controlling a location or a region of a maximum temperature in the exhaust gas treatment device. Thereby, as explained closer below, the air flow control means, for example comprising a throttle valve, can be used to control the temperature distribution in a longitudinal direction of the catalytic converter. By changing, during the sulfur regeneration, the location of the maximum temperature, it is possible to obtain a particularly thorough regeneration, since it can be secured that the temperature is increased sufficiently for sulfur deposit removal throughout the entire catalytic converter. Also, moving the maximum temperature in this way further reduces the risk of damaging the catalytic converter by high temperature exposure. Specially, the risk of excessive temperatures in an upstream end of the catalytic converter can be substantially reduced, so that catalytic converter damage can be effectively avoided,

The objects are also reached with an engine system according to any of the claims 7-12.

### DESCRIPTION OF THE FIGURES

Below, the invention will be described in detail with reference to the drawings, in which
- fig. 1 shows a schematic view of parts of a vehicle engine system, and
- fig. 2 shows a block diagram depicting a method according to an example departing from the scope of the invention,
- fig. 3 shows a block diagram depicting a method according to an embodiment of the invention, and
- fig. 4 is a schematic side view of a detail in fig. 1 with temperature distribution curves.

### DETAILED DESCRIPTION

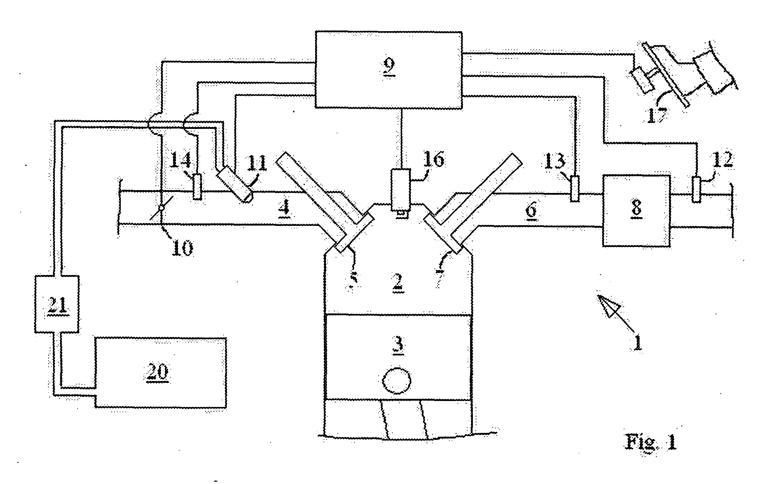

Fig. 1 shows a schematic view of parts of a vehicle engine system 1 comprising an internal combustion engine. The engine comprises four cylinders 2, of which only one is shown in fig. 1, each with a reciprocating piston 3. It should be noted that the invention is applicable to engines with any greater number of cylinders. Communication between each cylinder 2 and an inlet duct 4 is controlled by at least one respective inlet valve 5, and communication between each cylinder 2 and an exhaust duct 6 is controlled by at least one respective exhaust valve 7. Downstream from the cylinders 2, an exhaust gas treatment device 8, in the form of a catalytic converter, is provided.

The engine system 1 also comprises an engine control unit (ECU) 9, which can be provided as one unit, or as more than one logically interconnected physical units. The ECU 9 is adapted to control air flow control means comprising a throttle valve 10, and fuel injection means 11 comprising at least one fuel injector 11 in the inlet duct 4. In the embodiment, where the engine presents at least four cylinders, the fuel injection is controlled individually for each cylinder, by a fuel injector being provided at a separate portion of the inlet duct 4 communicating with the respective cylinder, (so called port fuel injection), Alternatively, as is known in the art, a fuel injector can be provided in each cylinder 2, (so called direct fuel injection). The fuel injection means 11 communicate with fuel storage means in the form of a fuel tank 20, via a fuel pump 21.

The ECU 9 is also adapted to receive signals from a downstream gas sensor 12 located downstream of the catalytic converter 8, as well as from an upstream gas sensor 13 located in the exhaust duct 6 between the cylinders 2 and the catalytic converter 8. The ECU 9 is adapted to determine, based on the signals from the first and second sensors 12, 13, the oxygen content in the exhaust gases upstream and downstream, respectively, of the catalytic converter 8. As is known in the art, the oxygen content in the exhaust gases is indicative of the lambda value of the air/fuel mixture provided to the engine.

In addition, the ECU 9 is also adapted to determine the engine air flow based on signals received from an air flow sensor 14 located in the inlet duct 4. As an alternative, as is known in the art, the air flow can be computed based on parameters such as the inlet manifold pressure, throttle position, engine speed, inlet temperature, and atmospheric pressure. Manners of determining the values of these parameters are known in the art, and not explained further here.

The ECU 9 is adapted to determine the temperature of the catalytic converter 8 based at least partly on the air flow, the lambda value, the ambient temperature, engine load, and engine rotational speed. As an alternative, the ECU 9 can be adapted to receive signals from a temperature sensor located in the exhaust duct 6 between the cylinders 2 and the catalytic converter 8, based on which signals, the catalytic converter temperature can be determined.

Further, at each cylinder, ignition means 16 comprising a spark plug 16 are provided and controllable individually by the ECU 9. In this example, the four cylinders of the engine are arranged in a straight line, and, numbering the cylinders according to their spatial sequence, the normal ignition sequence of the engine is 1-3-4-2.

The ECU is adapted to adjust, as known in the art, a value of a control parameter in the form of a requested torque parameter based on signals from an accelerator pedal 17 in the vehicle. The ECU 9 is also adapted to determine compare the requested torque to a first and a second requested torque threshold value. In the embodiment, the first requested torque threshold value is positive, and the second requested torque threshold value is zero. If the accelerator pedal 17 is released, i.e. un-depressed, the requested torque is determined to be zero or negative.

The ECU 9 is adapted to determine, based at least partly on an analysis of a signal from the downstream gas sensor 12, the level of sulfur poisoning of the catalytic converter 8, and whether the catalytic converter 8 is subjected to sulfur poisoning, as described in the European patent application entitled "An internal combustion engine system and a method for determining a condition of an exhaust gas treatment device, in a such a system", filed by the applicant on the first filing date of the present application, (EP 1 936 164 A1, EP 2 224 116 A1).

Alternatively, the ECU 9 can be adapted to determine the level of sulfur poisoning of the catalytic converter 8, and whether the catalytic converter 8 is subjected to sulfur poisoning, by some alternative method. For example, a sulfur poisoning establishment procedure can include adjusting in the ECU 9 a sulfur oxide (SOx) adsorption counter, based on air-fuel ratio, engine operating condition, catalyst temperature, the engine rotational speed and the intake pressure.

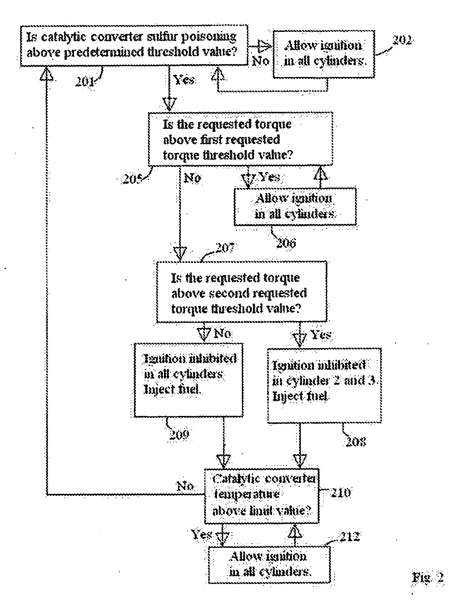

Fig. 2 depicts a method according to an example not covered by the present invention. The ECU 9 determines 201 whether data corresponding to the level of sulfur poisoning of the catalytic converter is above a predetermined sulfur poisoning threshold value. If it is determined that the data corresponding to the level of sulfur poisoning is not above the sulfur poisoning threshold value, it is determined 202 that no combustion inhibition sulfur regeneration action is carried out, i.e. ignition is allowed in all cylinders of the engine.

If it is determined that the data corresponding to the level of sulfur poisoning is above the sulfur poisoning threshold value, it is determined 205 whether the requested torque is above the first requested torque threshold value. The first requested torque threshold value is chosen so that torque values at or below it correspond to positive, moderate torque values, sufficient for low load conditions. If it is determined that the requested torque is above the first requested torque threshold value, it is determined 206 that no combustion inhibition sulfur regeneration action is carried out, i.e. ignition is allowed in all cylinders of the engine.

If it is determined that the requested torque is at or below the first requested torque threshold value, it is determined 207 whether the requested torque is above the second requested torque threshold value. The second requested torque threshold value is chosen so that torque values at or below it correspond to zero or negative torque values, typically occurring at a release of the accelerator pedal 17.

If it is determined 207 that the requested torque is above the second requested torque threshold value, the combustion inhibition sulfur regeneration action is carried out by inhibiting ignition in some of the cylinders, more specifically in cylinders no. 2 and 3, and allowing fuel injection into these cylinders 208. Thereby, the air and fuel is transported from the cylinders no. 2 and 3, through the exhaust duct 6. The mixture reaches the catalytic converter 8 where it is combusted to increase the temperature of the converter 8 in order to eliminate sulfur deposits.

In cylinders no. 1 and 4, ignition is allowed, so that air and fuel injected can be combusted to meet output torque requirements. Thus, based on the determined value of the requested torque, ignition is allowed in only some of the cylinders, whereby the sulfur regeneration action can be carried out, while at the same time the requested torque is provided. This method is applicable to engines with two or more cylinders, and the amount of cylinders in which ignition is activated can be dependent in the value of the requested torque.

If it is determined 207 that the requested torque is at or below the second requested torque threshold value, the combustion inhibition sulfur regeneration action is carried out by inhibiting ignition and allowing fuel injection in all cylinders 209. Thereby, the air and fuel is transported from all cylinders, through the exhaust duct 6, so that the mixture reaches the catalytic converter 8 where it is combusted to increase the temperature of the converter 8 in order to eliminate sulfur deposits.

Regardless whether the combustion inhibition sulfur regeneration action is carried out by inhibiting ignition in all cylinders 209, or in only some of the cylinders 208, during the regeneration action, the temperature of the catalytic converter 8 is monitored 210 by the ECU 9, in a manner mentioned above. If the catalytic converter temperature rises above a predetermined temperature limit value 210, the combustion inhibition sulfur regeneration action is terminated 212 by allowing ignition by the ignition means 16. The ECU 9 continues to monitor 213 the temperature of the catalytic converter 8, and if this temperature falls below the predetermined temperature limit value, it is again determined 205 whether the requested torque is above the first requested torque threshold value, and the steps following this determination 205, described above, are repeated.

As mentioned, the ECU 9 is adapted to determine the level of sulfur poisoning of the catalytic converter. Thereby, the ECU 9 can be adapted to terminate a regeneration action when the level of sulfur poisoning has been reduced to a predetermined level. Thus, referring to fig. 2, during the combustion inhibition sulfur regeneration action, regardless whether it is carried out by inhibiting ignition in all cylinders 209, or in only some of the cylinders 208, the level of sulfur poisoning of the catalytic converter is determined 201. If it is determined 201 that the level of sulfur poisoning has been reduced to the predetermined level, the combustion inhibition sulfur regeneration action is terminated 202 by allowing ignition in all cylinders.

Also, if the sulfur regeneration action is terminated, for example due to the catalytic converter temperature rising above the predetermined temperature limit value 210, or due to a torque above a the first requested torque threshold value being requested 205, the level of sulfur poisoning at the interruption of the regeneration action can be established. Thereby, the regeneration action can be "continued" in a suitable manner, once circumstances, as described above, allow such a "'continuation'"' to take place.

Regardless whether the combustion inhibition sulfur regeneration action is carried out by inhibiting ignition in all cylinders 209, or in only some of the cylinders 208, during the combustion inhibition sulfur regeneration action, the requested torque is continuously monitored, in order to determine whether the requested torque has changed so that the combustion inhibition sulfur regeneration action has to be changed or terminated. In this example, during the combustion inhibition sulfur regeneration action, the actual requested torque is continuously monitored and compared to the first and second requested torque threshold values. More specifically, it is continuously determined 205 whether the requested torque, for example due to maneuvering of the accelerator pedal, is above the second requested torque threshold value.

Subsequently, similar to what has been described above, if it is determined that the requested torque is above the first requested torque threshold value, it is determined 206 that the sulfur regeneration action is terminated by allowing ignition in all cylinders of the engine. If it is determined that the requested torque is at or below the first requested torque threshold value, it is determined 207 whether the requested torque is above the second requested torque threshold value. If it is determined 207 that the requested torque is above the second requested torque threshold value, the combustion inhibition sulfur regeneration action is carried out 208 by inhibiting ignition in cylinders no. 2 and 3, and allowing ignition in cylinders no. 1 and 4. If it is determined 207 that the requested torque is at or below the second requested torque threshold value, the combustion inhibition sulfur regeneration action is carried out by inhibiting ignition and allowing fuel injection in all cylinders 209.

Thus, apart from terminating the regeneration action if needed, the monitoring of the requested torque allows for changing a regeneration action in view of requested torque changes. More specifically, if the requested torque is changed from zero, or a negative value, to a moderate positive value, a regeneration action involving ignition inhibition in all cylinders can be changed to a regeneration action involving ignition inhibition in only some of the cylinders. Contrarily, if the requested torque is changed from moderate positive value to zero, or a negative value, a regeneration action involving ignition inhibition in only some of the cylinders can be changed to a regeneration action involving ignition inhibition in all cylinders.

It should be noted that as an alternative to the requested torque, some other control parameter, related to the requested torque can be used as a basis for the determination whether to perform the combustion inhibition regeneration action.

For example, the signal corresponding to the setting of the accelerator pedal, or a signal for controlling the fuel injection means 11 can be used instead of the requested torque parameter, since they are both related to the latter.

In the example described above, the combustion inhibition exhaust gas treatment device regeneration can run in any of two "modes", with combustion inhibited in all of the cylinders, or in two of the cylinders, depending on the requested torque. However, the number of such modes can be more than two. For example, in a four cylinder engine, combustion can be inhibited in one, two, three or all cylinders, where the number of cylinders in which combustion is allowed can be proportional to the requested torque. For instance, if the requested is higher that 0%, but lower than 25% of the maximum requested torque, combustion can be inhibited in three of the cylinders, if the requested is higher that 25%, but lower than 50% of the maximum requested torque, combustion can be inhibited in two of the cylinders, if the requested is higher that 50%, but lower than 75% of the maximum requested torque, combustion can be inhibited in one of the cylinders, and if the requested is higher that 75% of the maximum requested torque, combustion can allowed in all cylinders. Similar relations between the requested torque and the number of cylinders in which combustion is inhibited can be devised for engines with any number of cylinders, e.g. five, six, eight, etc.

Also, the number of cylinders in which combustion is inhibited can be dependent on the rotational speed of the engine. For example, assuming a constant requested torque, combustion can be inhibited in a relatively large number of cylinders at relatively high engine speeds, and combustion can be inhibited in a relatively small number of cylinders, or no cylinders, at relatively low engine speeds.

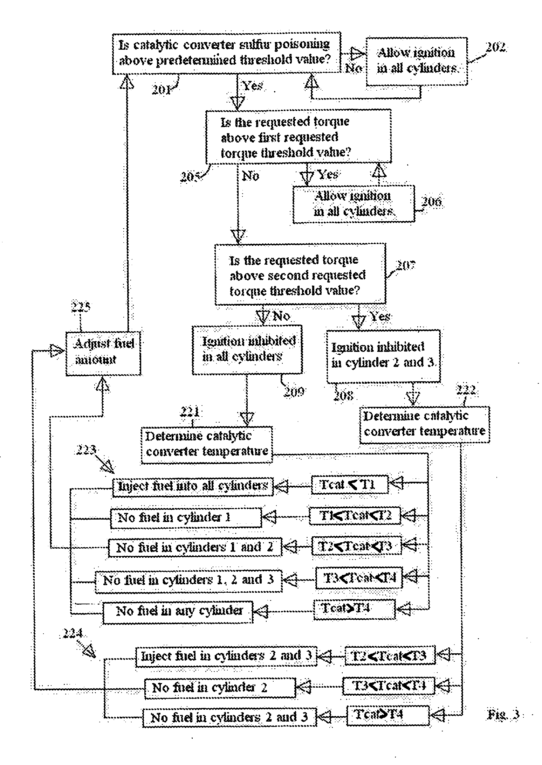

Reference is made to fig. 3, showing an embodiment of the invention. As in the example described with reference to fig. 2, the ECU 9 determines 201 whether data corresponding to the level of sulfur poisoning of the catalytic converter is above a predetermined sulfur poisoning threshold value, and depending on this determination, it is determined 202 that no combustion inhibition sulfur regeneration action is carried out, or it is determined 205 whether the requested torque is above the first requested torque threshold value. Depending on the determination 205 whether the requested torque is above the first requested torque threshold value, it is determined 206 that no combustion inhibition sulfur regeneration action is carried out, or it is determined 207 whether the requested torque is above the second requested torque threshold value.

In the embodiment depicted in fig. 3, if it is determined 207 that the requested torque is at or below the second requested torque threshold value, the combustion inhibition sulfur regeneration action is carried out by inhibiting ignition in all cylinders 209. The temperature Teat of the catalytic converter 8 is determined 221, and based on the temperature, the number of cylinders with ignition inhibition in which fuel is to be injected is determined 223.

If the catalytic converter temperature Tcat is below a first temperature threshold value T1, fuel is injected into all cylinders. If the catalytic converter temperature Teat is above the first temperature threshold value T1 and below a second temperature threshold value T2, fuel is injected in all cylinders in which ignition is inhibited, except one of them, in this example cylinder no. 1. If the catalytic converter temperature Tcat is above the second temperature threshold value T2 and below a third temperature threshold value T3, fuel is injected in all cylinders in which ignition is inhibited, except two of them, in this example cylinders no. 1 and 2. If the catalytic converter temperature Tcat is above the third temperature threshold value T3 and below a fourth temperature threshold value T4, fuel is injected in all cylinders in which ignition is inhibited, except three of them, in this example cylinders no. 1, 2 and 3. If the catalytic converter temperature Tcat is above the fourth temperature threshold value T4, no fuel is injected into any of the cylinders in which ignition is inhibited. By controlling the number of cylinders in which fuel is injected during ignition inhibition, a coarse temperature control of the catalytic converter 8 is achieved.

Regardless of the number of cylinders in which fuel is injected during ignition inhibition, the amount of fuel injected in each cylinder with ignition inhibition is controlled 225, so that a fine temperature control of the catalytic converter 8 is achieved.

If it is determined 207 that the requested torque is above the second requested torque threshold value, the combustion inhibition sulfur regeneration action is carried out by inhibiting ignition in cylinders no. 2 and 3, 208. The temperature Tcat of the catalytic converter 8 is determined 222, and based on the temperature, the number of cylinders with ignition inhibition in which fuel is to be injected is determined 224.

If the catalytic converter temperature Teat is below the third temperature threshold value T3, fuel is injected in all cylinders in which ignition is inhibited, i.e. cylinders no. 2 and 3. If the catalytic converter temperature Tcat is above the third temperature threshold value T3 and below a fourth temperature threshold value T4, fuel is injected in all cylinders in which ignition is inhibited, except one of them, in this example cylinder no. 2. If the catalytic converter temperature Teat is above the fourth temperature threshold value T4, no fuel is injected into any of the cylinders in which ignition is inhibited. Thereby, as in the case of ignition inhibition in all cylinders 209, a coarse temperature control of the catalytic converter 8 is achieved.

Also, as in the case of ignition inhibition in all cylinders 209, regardless of the number of cylinders in which fuel is injected during ignition inhibition, the amount of fuel injected in each cylinder with ignition inhibition is controlled 225, so that a fine temperature control of the catalytic converter 8 is achieved.

Similar to the example described with reference to fig. 2, regardless whether the regeneration is carried out by inhibiting ignition in all cylinders 209, or in only some of the cylinders 208, the level of sulfur poisoning of the catalytic converter is determined 201. If it is determined 201 that the level of sulfur poisoning has been reduced to the predetermined level, the combustion inhibition sulfur regeneration action is terminated 202 by allowing ignition in all cylinders.

Also, similar to the example described with reference to fig. 2, regardless whether the combustion inhibition sulfur regeneration action is carried out by inhibiting ignition in all cylinders 209, or in only some of the cylinders 208, during the combustion inhibition sulfur regeneration action, the requested torque is continuously monitored, in order to determine whether the requested torque has changed so that the combustion inhibition sulfur regeneration action has to be changed or terminated.

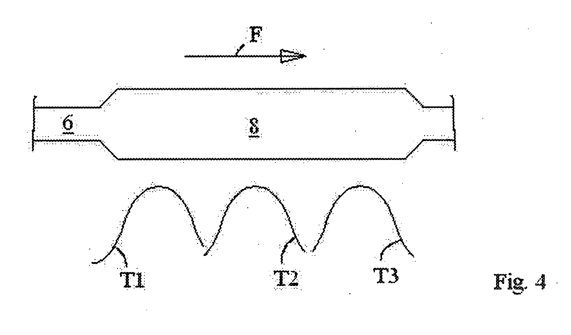

Reference is made to fig. 1 and 4. The method comprises controlling the throttle valve 10 so as to control the combustion in the catalytic converter 8 during the combustion inhibition exhaust gas treatment device regeneration. Based on the flow of fuel injected, the throttle is controlled so that a combustible air/fuel mixture is provided to the catalytic converter.

Referring to fig. 4, in which a gas flow direction is indicated with an arrow F, the throttle valve 10 is also used during the regeneration to control the location of a maximum temperature in the exhaust gas treatment device. By controlling the throttle valve 10 so that a relatively small air flow is provided, the air/fuel mixture will be combusted relatively far upstream in the catalytic converter 8. As a result, the temperature distribution in the catalytic converter, indicated in fig. 4 with the curve T1, will present a maximum relatively far upstream. By controlling the throttle valve 10 so that larger air flows are provided, the air/fuel mixture will be combusted further downstream in the catalytic converter 8. As a result, the temperature distribution in the catalytic converter, T2, T3, will present maximums further downstream, depending on the air flow. In other words, increasing the air flow will move the maximum temperature downstream.

Thus, the location of the maximum temperature can be changed, during the sulfur regeneration, which in turn makes it possible to obtain a particularly thorough regeneration, since it can be secured that the temperature is increased sufficiently for sulfur deposit removal throughout the entire catalytic converter.

As an alternative to, or in addition to a throttle valve 10, the air flow control means can comprise control means (not shown) for the inlet valve(s) 5 and/or the exhaust valve(s) 7, for example in the form of a variable valve timing (VVT) system and/or a cam profile shifting (CPS) system. Such inlet and/or exhaust valve control means can be used as an alternative or in addition to the throttle valve 10 for controlling the combustion in the catalytic converter 8 during the combustion inhibition exhaust gas treatment device regeneration.

Besides exhaust gas treatment device poisoning caused by sulfur, the invention is equally applicable to poisoning caused by other substances, such as phosphorus. In particular, the invention results in the catalyst average temperature being kept higher, and as a result, long term phosphorus poisoning can be reduced.

## Claims

1. A method for an exhaust gas treatment device (8) in an engine system comprising an internal combustion engine comprising at least four cylinders (2), fuel injection means (11) and, ignition means (16), the method comprising performing a combustion inhibition exhaust gas treatment device regeneration (208, 209, 223, 224, 225), comprising inhibiting combustion in at least one of the cylinders (2), the combustion inhibition exhaust gas treatment device regeneration (208, 209, 223, 224, 225) comprising controlling the fuel injection means (11) so that fuel is allowed into at hast one of the cylinders (2) in which combustion is inhibited, and the method further comprises determining (221, 222) the temperature of the exhaust gas treatment device (8), controlling the number of cylinders (2) into which fuel is hallowed while combustion is inhibited in dependence (223, 224) on the temperature of the exhaust gas treatment device and, controlling (225) the amount of fuel allowed into the cylinders (2) into which fuel is allowed while combustion is inhibited, in dependence on the temperature of the exhaust gas treatment device, **characterized in that**,
the step of inhibiting combustion in at least one of the cylinders (2) comprises inhibiting combustion in all cylinders (2) of the internal combustion engine and controlling the ignition means (16) at the cylinders (2) so that combustion is inhibited, and **in that**
if the temperature of the exhaust gas treatment device (8) is below a first temperature threshold value (T1), fuel is injected into all cylinders in which ignition is inhibited,
if the temperature of the exhaust gas treatment device (8) is above the first temperature threshold value (T1) and below a second temperature threshold value (T2), fuel is injected in all cylinders in which cylinders in which ignition is inhibited, except one of them,
if the temperature of the exhaust gas treatment device (8) is above the second temperature threshold value (T2) and below a third temperature threshold value (T3), fuel is injected m all cylinders in which ignition is inhibited except two of them.
if the temperature of the exhaust as treatment device (8) is above the third temperature threshold value (T3) and below a fourth temperature threshold value (T4), fuel is injected in all cylinders in which ignition is inhibited, except three of them, and,
if the temperature of the exhaust gas treatment device (8) is above the fourth temperature threshold value (T4), no fuel is injected into any of the cylinders in which ignition is inhibited.

2. A method according to any of the preceding claims, comprising determining during the combustion inhibition exhaust gas treatment device regeneration a value of a control parameter corresponding to, or being related to a requested torque of the engine, the combustion inhibition exhaust gas treatment device regeneration being dependent (205, 207) on the control parameter value determination.

3. A method according to claim 2, wherein the number of cylinders in which combustion is inhibited is dependent (205,207) on the control parameter value determination. regeneration if it is determined that the temperature of the exhaust gas treatment device (8) is above a predetermined temperature limit value.

4. A method according to any of the preceding claims, comprising controlling air flow control means (10) so as to control the combustion in the exhaust gas treatment device (8) during the combustion inhibition exhaust gas treatment device regeneration.

5. A method according to claim 4, wherein controlling the combustion in the exhaust gas treatment device (8) comprises controlling a location or a region of a maximum temperature in the exhaust gas treatment device (8).

6. A method for an exhaust gas treatment device (8) in an engine system comprising an internal combustion engine comprising at least four cylinders (2), fuel injection means (11) and ignition means (16),
the method comprising performing a combustion inhibition exhaust gas treatment device regeneration (208, 209, 223, 224, 225), comprising inhibiting combustion, in two of the cylinders (2),
the combustion inhibition exhaust gas treatment device regeneration (208, 209, 223, 224, 225) comprising controlling the fuel injection means (11) so that fuel is allowed into at least one of the cylinders (2) in which combustion is inhibited, and the method further comprises
determining (221, 222) the temperature of the exhaust gas treatment device (8), controlling the number of cylinders (2) into which fuel is allowed while combustion is inhibited in dependence (223, 224) on the temperature of the exhaust gas treatment device, controlling the amount of fuel allowed into the cylinders (2) into which fuel is allowed while combustion is inhibited, in dependence on the temperature of the exhaust gas treatment device, and controlling the ignition means (16) at the cylinders (2) so that combustion is inhibited **characterized in that**,
if the temperature of the exhaust gas treatment device (8) is below a third temperature threshold value (T3), fuel is injected in all cylinders in which ignition is inhibited,
if the temperature of the exhaust gas treatment device is above the third temperature threshold value (T3) and below a fourth temperature threshold value (T4), fuel is injected in all cylinders in which ignition is inhibited, except one of them and
if the temperature of the exhaust gas treatment device (8) is Above the fourth temperature threshold value (T4), no fuel is injected into any of the cylinders in which ignition is inhibited.

7. An engine system comprising an internal combustion engine with at least four cylinders (2) fuel injection means (11) and ignition means (16), the engine system further comprising an engine control unit (9) adapted to control the fuel injection means (11), the engine control unit (9) being adapted to control a combustion inhibition exhaust gas treatment device regeneration, the engine control unit (9) being adapted to inhibit, during the combustion inhibition exhaust gas treatment device regeneration, combustion in at least one of the cylinders (2), the engine control unit (9) being adapted to control, during the combustion inhibition exhaust gas treatment device regeneration, the fuel injection means (11) so that fuel is allowed into at least one of the cylinders (2) in which combustion is inhibited, and the engine control unit (9) is adapted to determine the temperature of the exhaust gas treatment device (8), to control the number of cylinders (2) into which fuel is allowed while combustion is inhibited .in dependence on the temperature of the exhaust gas treatment device, and to control the amount of fuel allowed into the cylinders (2) into which fuel is allowed while combustion is inhibited, in dependence on the temperature of the exhaust gas treatment device, **characterized in that**
the engine control unit (9) inhibits, during the combustion inhibition exhaust gas treatment device regeneration, combustion in all cylinders (2) of the internal combustion engine by controlling the ignition means (16) so that combustion is inhibited
and **in that**
if the temperature of the exhaust gas treatment device is below a first temperature threshold value (T1), the engine control unit (9) controls the fuel injection means (11) so that fuel is injected into all cylinders in which combustion is inhibited,
if the temperature of the exhaust gas treatment device is above the first temperature threshold value (T1) and below a second temperature threshold value (T2), the engine control unit (9) controls the fuel infection means (11) so that fuel is injected in all cylinders in which ignition is inhibited, except one of them,
if the temperature of the exhaust gas treatment device is above the second temperature threshold value (T2) and below a third temperature threshold value (T3), the engine control unit (9) controls the fuel injection means (11) so that fuel is injected in all cylinders in which ignition is inhibited, except two of them,
if the temperature of the exhaust gas treatment devices is above the third temperature threshold value (T3) and below a fourth temperature threshold value (T4), the engine control unit (9) controls the fuel injection means (11) so that fuel is injected in all cylinders in which ignition is inhibited, except three of them, and,
if the temperature of the exhaust gas treatment device is above the fourth temperature threshold value (T4), the engine control unit (9) controls the fuel injection means (11) so that no fuel is injected into any of the cylinders in which ignition is inhibited.

8. An engine system according to any of the claims 6-7, wherein the engine control unit (9) is adapted to determine, during the combustion inhibition exhaust gas treatment device regeneration, a value of a control parameter corresponding to, or being related to a requested torque of the engine, and to control the combustion inhibition exhaust gas treatment device regeneration in dependence on the control parameter value.

9. An engine system according to claim 8, wherein the engine control unit (9) is adapted to determine, during the combustion inhibition exhaust gas treatment device regeneration and based on the control parameter value determination, the number of cylinders in which combustion, is inhibited.

10. An engine system according to any of the claims 6-9, wherein the engine comprises air flow control means (10) controllable by the engine control unit (9), the engine control unit (9) being adapted to control the air flow control means (10) so as to control the combustion in the exhaust gas treatment device (8) during the combustion inhibition exhaust gas treatment device regeneration.

11. An engine system according to claim 10, therein the engine control unit (9) is adapted to control the air flow control means (10) so as to control a location or a region of a maximum temperature in the exhaust gas treatment device (8).

12. An engine system comprising an internal combustion engine with at least four cylinders (2), fuel injection means (11), and ignition means (16), the engine system further comprising an engine control unit (9) adapted to control the fuel injection means (11), the engine control unit (9) being adapted to control a combustion inhibition exhaust gas treatment device regeneration, the engine control unit (9) being adapted to inhibit, during the combustion inhibition exhaust gas treatment device regeneration, combustion in two of the cylinders (2), the engine control unit (9) being adapted to control, during the combustion inhibition exhaust gas treatment device regeneration, the fuel injection means (11) so that fuel is allowed into at least one of the cylinders (2) in which combustion is inhibited, and the engine control unit (9) is adapted to determine the temperature of the exhaust gas treatment device (8), to control the number of cylinders (2) into which fuel is allowed while combustion is inhibited in dependence on the temperature of the exhaust gas treatment device, to control the amount of fuel allowed into the cylinders (2) into which fuel is allowed while combustion is inhibited, in dependence on the temperature of the exhaust gas treatment device, and to control the ignition means (16) so that combustion is inhibited, **characterized in that**
if the temperature of the exhaust gas treatment device is below a third temperature threshold value (T3), the engine control unit (9) controls the fuel injection means (11) so that fuel is injected in all cylinders in which ignition is inhibited,
if the temperature of the exhaust gas treatment device is above the third temperature threshold value (T3) and below a fourth temperature threshold value (T4), the engine control unit (9) controls the fuel injection means (11) so that fuel is injected in all cylinders in which ignition is inhibited, except one of them, and
if the temperature of the exhaust gas treatment device is above the fourth temperature threshold value (T4), the engine control unit (9) controls the fuel injection means (11) so that no fuel is injected into any of the cylinders in which ignition is inhibited.

## Patentansprüche

1. Verfahren für eine Abgasbehandlungsvorrichtung (8) in einem Kraftmaschinensystem, das eine Brennkraftmaschine mit wenigstens vier Zylindern (2), Kraftstoffeinspritzmitteln (11) und Zündungsmitteln (16) umfasst, wobei das Verfahren das Ausführen einer Regeneration (208, 209, 223, 224, 225) einer Abgasbehandlungsvorrichtung mittels Verbrennungsverhinderung umfasst, die das Verhindern einer Verbrennung in wenigstens einem der Zylinder (2) umfasst, wobei die Regeneration (208, 209, 223, 224, 225) der Abgasbehandlungsvorrichtung mittels Verbrennungsverhinderung das Steuern der Kraftstoffeinspritzmittel (11) in der Weise, dass Kraftstoff in wenigstens einen der Zylinder (2) eingelassen wird, in dem die Verbrennung verhindert wird, umfasst, wobei das Verfahren ferner das Bestimmen (221, 222) der Temperatur der Abgasbehandlungsvorrichtung (8), das Steuern der Anzahl von Zylindern (2), in die Kraftstoff eingelassen wird, während die Verbrennung verhindert wird, in Abhängigkeit (223, 224) von der Temperatur der Abgasbehandlungsvorrichtung und das Steuern (225) der Kraftstoffmenge, die in den Zylinder (2), in den Kraftstoff eingelassen wird, eingelassen wird, während die Verbrennung verhindert wird, in Abhängigkeit von der Temperatur der Abgasbehandlungsvorrichtung umfasst,
**dadurch gekennzeichnet, dass**
der Schritt des Verhinderns der Verbrennung in wenigstens einem der Zylinder (2) das Verhindern der Verbrennung in allen Zylindern (2) der Brennkraftmaschine und das Steuern der Zündungsmittel (16) bei den Zylindern (2) in der Weise, dass eine Verbrennung verhindert wird, umfasst und dass
dann, wenn die Temperatur der Abgasbehandlungsvorrichtung (8) unter einem ersten Temperaturschwellenwert (T1) liegt, Kraftstoff in alle Zylinder, in denen eine Verbrennung verhindert wird, eingespritzt wird,
dann, wenn die Temperatur der Abgasbehandlungsvorrichtung (8) über dem ersten Temperaturschwellenwert (T1) und unter einem zweiten Temperaturschwellenwert (T2) liegt, Kraftstoff in alle Zylinder, in denen eine Verbrennung verhindert wird, mit Ausnahme eines von ihnen, eingespritzt wird,
dann, wenn die Temperatur der Abgasbehandlungsvorrichtung (8) über dem zweiten Temperaturschwellenwert (T2) und unter einem dritten Temperaturschwellenwert (T3) liegt, Kraftstoff in alle Zylinder, in denen eine Zündung verhindert wird, mit Ausnahme von zwei von ihnen, eingespritzt wird,
dann, wenn die Temperatur der Abgasbehandlungsvorrichtung (8) über dem dritten Temperaturschwellenwert (T3) und unter einem vierten Temperaturschwellenwert (T4) liegt, Kraftstoff in alle Zylinder, in denen eine Verbrennung verhindert wird, mit Ausnahme von drei von ihnen, eingespritzt wird, und
dann, wenn die Temperatur der Abgasbehandlungsvorrichtung (8) über dem vierten Temperaturschwellenwert (T4) liegt, in keinen der Zylinder, in denen eine Verbrennung verhindert wird, Kraftstoff eingespritzt wird.

2. Verfahren nach einem vorhergehenden Anspruch, das das Bestimmen eines Wertes eines Steuerparameters, der einem angeforderten Drehmoment der Kraftmaschine entspricht oder damit in Beziehung steht, während der Regeneration der Abgasbehandlungsvorrichtung mittels Verbrennungsverhinderung umfasst, wobei die Regeneration der Abgasbehandlungsvorrichtung mittels Verbrennungsverhinderung von der Bestimmung des Steuerparameterwertes abhängt (205, 207).

3. Verfahren nach Anspruch 2, wobei die Anzahl von Zylindern, in denen die Verbrennung verhindert wird, von der Bestimmung des Steuerparameterwertes (205, 207) abhängt.

4. Verfahren nach einem der vorhergehenden Ansprüche, das das Steuern von Luftdurchfluss-Steuermitteln (10) in der Weise, dass die Verbrennung in der Abgasbehandlungsvorrichtung (8) während der Regeneration der Abgasbehandlungsvorrichtung mittels Verbrennungsverhinderung gesteuert wird, umfasst.

5. Verfahren nach Anspruch 4, wobei das Steuern der Verbrennung in der Abgasbehandlungsvorrichtung (8) das Steuern eines Ortes oder eines Bereichs einer maximalen Temperatur in der Abgasbehandlungsvorrichtung (8) umfasst.

6. Verfahren für eine Abgasbehandlungsvorrichtung (8) in einem Kraftmaschinensystem, das eine Brennkraftmaschine mit wenigstens vier Zylindern (2), Zündungsmitteln (16) und Kraftstoffeinspritzmitteln (11) umfasst,
wobei das Verfahren das Ausführen einer Regeneration (208, 209, 223, 224, 225) einer Abgasbehandlungsvorrichtung mittels Verbrennungsverhinderung umfasst, die das Verhindern einer Verbrennung in zwei der Zylinder (2) umfasst,
wobei die Regeneration (208, 209, 223, 224, 225) der Abgasbehandlungsvorrichtung mittels Verbrennungsverhinderung das Steuern der Kraftstoffeinspritzmittel (11) in der Weise, dass Kraftstoff in wenigstens einen der Zylinder (2), in dem eine Verbrennung verhindert wird, umfasst, wobei das Verfahren ferner umfasst:
Bestimmen (221, 222) der Temperatur der Abgasbehandlungsvorrichtung (8),
Steuern der Anzahl von Zylindern (2), in die Kraftstoff eingelassen wird, während die Verbrennung verhindert wird, in Abhängigkeit (223, 224) von der Temperatur der Abgasbehandlungsvorrichtung, Steuern der Kraftstoffmenge, die in den Zylinder (2) eingelassen wird, in den Kraftstoff eingelassen wird, während eine Verbrennung verhindert wird, in Abhängigkeit von der Temperatur der Abgasbehandlungsvorrichtung und Steuern der Zündungsmittel (16) bei den Zylindern (2) in der Weise, dass eine Verbrennung verhindert wird,
**dadurch gekennzeichnet, dass**
dann, wenn die Temperatur der Abgasbehandlungsvorrichtung (8) unter einem dritten Temperaturschwellenwert (T3) liegt, Kraftstoff in alle Zylinder, in denen eine Verbrennung verhindert wird, eingespritzt wird,
dann, wenn die Temperatur der Abgasbehandlungsvorrichtung (8) über dem dritten Temperaturschwellenwert (T3) und unter einem vierten Temperaturschwellenwert (T4) liegt, Kraftstoff in alle Zylinder, in denen eine Zündung verhindert wird, mit Ausnahme eines von ihnen, eingespritzt wird und
dann, wenn die Temperatur der Abgasbehandlungsvorrichtung (8) über dem vierten Temperaturschwellenwert (T4) liegt, in keinen der Zylinder, in denen eine Zündung verhindert wird, Kraftstoff eingespritzt wird.

7. Kraftmaschinensystem, das eine Brennkraftmaschine mit wenigstens vier Zylindern (2), Zündungsmitteln (16) und Kraftstoffeinspritzmitteln (11) umfasst, wobei das Kraftmaschinensystem ferner eine Kraftmaschinensteuereinheit (9) umfasst, die dazu ausgelegt ist, die Kraftstoffeinspritzmittel (11) zu steuern, wobei die Kraftmaschinensteuereinheit (9) dazu ausgelegt ist, eine Regeneration einer Abgasbehandlungsvorrichtung mittels Verbrennungsverhinderung zu steuern, wobei die Kraftmaschinensteuereinheit (9) dazu ausgelegt ist, während der Regeneration der Abgasbehandlungsvorrichtung mittels Verbrennungsverhinderung eine Verbrennung in wenigstens einem der Zylinder (2) zu verhindern, wobei die Kraftmaschinensteuereinheit (9) dazu ausgelegt ist, während der Regeneration der Abgasbehandlungsvorrichtung mittels Verbrennungsverhinderung die Kraftstoffeinspritzmittel (11) in der Weise zu steuern, dass Kraftstoff in wenigstens einen der Zylinder (2), in denen eine Verbrennung verhindert wird, eingelassen wird, und die Kraftmaschinensteuereinheit (9) dazu ausgelegt ist, die Temperatur der Abgasbehandlungsvorrichtung (8) zu bestimmen, um die Anzahl von Zylindern (2), in die Kraftstoff eingelassen wird, während die Verbrennung verhindert wird, in Abhängigkeit von der Temperatur der Abgasbehandlungsvorrichtung zu steuern und die Kraftstoffmenge, die in die Zylinder (2) eingelassen wird, in die Kraftstoff eingelassen wird, während eine Verbrennung verhindert wird, in Abhängigkeit von der Temperatur der Abgasbehandlungsvorrichtung zu steuern,
**dadurch gekennzeichnet, dass**
die Kraftmaschinensteuereinheit (9) während der Regeneration der Abgasbehandlungsvorrichtung mittels Verbrennungsverhinderung eine Verbrennung in allen Zylindern (2) der Brennkraftmaschine durch Steuern der Zündungsmittel (16) in der Weise, dass eine Verbrennung verhindert wird, verhindert,
und dass,
dann, wenn die Temperatur der Abgasbehandlungsvorrichtung unter einem ersten Temperaturschwellenwert (T1) liegt, die Kraftmaschinensteuereinheit (9) die Kraftstoffeinspritzmittel (11) in der Weise steuert, dass Kraftstoff in alle Zylinder, in denen eine Verbrennung verhindert wird, eingespritzt wird,
dann, wenn die Temperatur der Abgasbehandlungsvorrichtung über dem ersten Temperaturschwellenwert (T1) und unter einem zweiten Temperaturschwellenwert (T2), die Kraftmaschinensteuereinheit (9) die Kraftstoffeinspritzmittel (11) in der Weise steuert, dass Kraftstoff in alle Zylinder, in denen eine Zündung verhindert wird, mit Ausnahme eines von ihnen, einspritzt,
dann, wenn die Temperatur der Abgasbehandlungsvorrichtung über dem zweiten Temperaturschwellenwert (T2) und unter einem dritten Temperaturschwellenwert (T3) liegt, die Kraftmaschinensteuereinheit (9) die Kraftstoffeinspritzmittel (11) in der Weise steuert, dass Kraftstoff in alle Zylinder, in denen eine Zündung verhindert wird, mit Ausnahme von zwei von ihnen, eingespritzt wird,
dann, wenn die Temperatur der Abgasbehandlungsvorrichtung über dem dritten Temperaturschwellenwert (T3) und unter einem vierten Temperaturschwellenwert (T4) liegt, die Kraftmaschinensteuereinheit (9) die Kraftstoffeinspritzmittel (11) in der Weise steuert, dass Kraftstoff in alle Zylinder, in denen eine Zündung verhindert wird, mit Ausnahme von drei von ihnen, eingespritzt wird, und
dann, wenn die Temperatur der Abgasbehandlungsvorrichtung über dem vierten Temperaturschwellenwert (T4) liegt, die Kraftmaschinensteuereinheit (9) die Kraftstoffeinspritzmittel (11) in der Weise steuert, dass in keinen der Zylinder, in denen eine Zündung verhindert wird, Kraftstoff eingespritzt wird.

8. Kraftmaschinensystem nach einem der Ansprüche 6-7, wobei die Kraftmaschinensteuereinheit (9) dazu ausgelegt ist, während der Regeneration der Abgasbehandlungsvorrichtung mittels Verbrennungsverhinderung einen Wert eines Steuerparameters zu bestimmen, der einem angeforderten Drehmoment der Kraftmaschine entspricht oder damit in Beziehung steht, und die Regeneration der Abgasbehandlungsvorrichtung mittels Verbrennungsverhinderung in Abhängigkeit von dem Steuerparameterwert zu steuern.

9. Kraftmaschinensystem nach Anspruch 8, wobei die Kraftmaschinensteuereinheit (9) dazu ausgelegt ist, während der Regeneration der Abgasbehandlungsvorrichtung mittels Verbrennungsverhinderung und anhand der Bestimmung des Steuerparameterwertes die Anzahl von Zylindern, in denen eine Verbrennung verhindert wird, zu bestimmen.

10. Kraftmaschinensystem nach einem der Ansprüche 6-9, wobei die Kraftmaschine Luftdurchfluss-Steuermittel (10) umfasst, die durch die Kraftmaschinensteuereinheit (9) gesteuert werden können, wobei die Kraftmaschinensteuereinheit (9) dazu ausgelegt ist, die Luftdurchfluss-Steuermittel (10) in der Weise zu steuern, dass die Verbrennung in der Abgasbehandlungsvorrichtung (8) während der Regeneration der Abgasbehandlungsvorrichtung mittels Verbrennungsverhinderung gesteuert wird.

11. Kraftmaschinensystem nach Anspruch 10, wobei die Kraftmaschinensteuereinheit (9) dazu ausgelegt ist, die Luftdurchfluss-Steuermittel (10) in der Weise zu steuern, dass ein Ort oder ein Bereich einer maximalen Temperatur in der Abgasbehandlungsvorrichtung (8) gesteuert wird.

12. Kraftmaschinensystem, das eine Brennkraftmaschine mit wenigstens vier Zylindern (2), Zündungsmitteln (16) und Kraftstoffeinspritzmitteln (11) umfasst, wobei das Kraftmaschinensystem ferner eine Kraftmaschinensteuereinheit (9) umfasst, die dazu ausgelegt ist, die Kraftstoffeinspritzmittel (11) zu steuern, wobei die Kraftmaschinensteuereinheit (9) dazu ausgelegt ist, eine Regeneration einer Abgasbehandlungsvorrichtung mittels Verbrennungsverhinderung zu steuern, wobei die Kraftmaschinensteuereinheit (9) dazu ausgelegt ist, während der Regeneration der Abgasbehandlungsvorrichtung mittels Verbrennungsverhinderung eine Verbrennung in zwei der Zylinder (2) zu verhindern, wobei die Kraftmaschinensteuereinheit (9) dazu ausgelegt ist, während der Regeneration der Abgasbehandlungsvorrichtung mittels Verbrennungsverhinderung die Kraftstoffeinspritzmittel (11) in der Weise zu steuern, dass Kraftstoff in wenigstens einen der Zylinder (2), in denen eine Verbrennung verhindert wird, eingelassen wird, und die Kraftmaschinensteuereinheit (9) dazu ausgelegt ist, die Temperatur der Abgasbehandlungsvorrichtung (8) zu bestimmen, die Anzahl von Zylindern, in die Kraftstoff eingelassen wird, während eine Verbrennung verhindert wird, in Abhängigkeit von der Temperatur der Abgasbehandlungsvorrichtung zu steuern, die Kraftstoffmenge, die in die Zylinder (2) eingelassen wird, in die Kraftstoff eingelassen wird, während eine Verbrennung verhindert wird, in Abhängigkeit von der Temperatur der Abgasbehandlungsvorrichtung zu steuern, und die Zündungsmittel (16) in der Weise zu steuern, dass eine Verbrennung verhindert wird,
**dadurch gekennzeichnet, dass**
dann, wenn die Temperatur der Abgasbehandlungsvorrichtung unter einem dritten Schwellenwert (T3) liegt, die Kraftmaschinensteuereinheit (9) die Kraftstoffeinspritzmittel (11) in der Weise steuert, dass Kraftstoff in alle Zylinder eingespritzt wird, in denen eine Zündung verhindert wird,
dann, wenn die Temperatur der Abgasbehandlungsvorrichtung über dem dritten Temperaturschwellenwert (T3) und unter einem vierten Temperaturschwellenwert (T4) liegt, die Kraftmaschinensteuereinheit (9) die Kraftstoffeinspritzmittel (11) in der Weise steuert, dass Kraftstoff in alle Zylinder, in denen eine Verbrennung verhindert wird, mit Ausnahme eines von ihnen, eingespritzt wird, und
dann, wenn die Temperatur der Abgasbehandlungsvorrichtung über dem vierten Temperaturschwellenwert (T4) liegt, die Kraftmaschinensteuereinheit (9) die Kraftstoffeinspritzmittel (11) in der Weise steuert, dass in keinen der Zylinder, in denen eine Zündung verhindert wird, Kraftstoff eingespritzt wird.

## Revendications

1. Procédé pour dispositif de traitement des gaz d'échappement (8) dans un système de moteur comprenant un moteur à combustion interne comprenant au moins quatre cylindres (2), des moyens d'injection de carburant (11) et des moyens d'allumage (16), le procédé comprenant la réalisation d'une régénération (208, 209, 223, 224, 225) du dispositif de traitement des gaz d'échappement agissant par inhibition de la combustion, comprenant l'inhibition de la combustion dans au moins un des cylindres (2), la régénération (208, 209, 223, 224, 225) du dispositif de traitement des gaz d'échappement agissant par inhibition de la combustion comprenant la commande des moyens d'injection de carburant (11), de sorte que du carburant est admis dans au moins un des cylindres (2) où est inhibée la combustion, et le procédé comprend en outre la détermination (221, 222) de la température du dispositif de traitement des gaz d'échappement (8), la commande du nombre de cylindres (2) où est admis du carburant pendant que la combustion est inhibée en fonction (223, 224) de la température du dispositif de traitement des gaz d'échappement et la commande (225) de la quantité de carburant admise dans les cylindres (2) où est admis du carburant pendant que la combustion est inhibée, en fonction de la température du dispositif de traitement des gaz d'échappement, **caractérisé en ce que** l'étape consistant à inhiber la combustion dans au moins un des cylindres (2) comprend l'inhibition de la combustion dans tous les cylindres (2) du moteur à combustion interne et la commande des moyens d'allumage (16) au niveau des cylindres (2) de manière à inhiber la combustion et **en ce que** :
- si la température du dispositif de traitement des gaz d'échappement (8) est inférieure à une première valeur seuil de température (T1), du carburant est injecté dans tous les cylindres où est inhibé l'allumage,
- si la température du dispositif de traitement des gaz d'échappement (8) est supérieure à la première valeur seuil de température (T1) et inférieure à une deuxième valeur seuil de température (T2), du carburant est injecté dans tous les cylindres où est inhibé l'allumage, sauf l'un d'eux,
- si la température du dispositif de traitement des gaz d'échappement (8) est supérieure à la deuxième valeur seuil de température (T2) et inférieure à une troisième valeur seuil de température (T3), du carburant est injecté dans tous les cylindres où est inhibé l'allumage, sauf deux d'entre eux,
- si la température du dispositif de traitement des gaz d'échappement (8) est supérieure à la troisième valeur seuil de température (T3) et inférieure à une quatrième valeur seuil de température (T4), du carburant est injecté dans tous les cylindres où est inhibé l'allumage, sauf trois d'entre eux, et
- si la température du dispositif de traitement des gaz d'échappement (8) est supérieure à la quatrième valeur seuil de température (T4), aucun carburant n'est injecté dans aucun des cylindres où est inhibé l'allumage.

2. Procédé selon la revendication 1, comprenant la détermination, au cours de la régénération du dispositif de traitement des gaz d'échappement agissant par inhibition de la combustion, d'une valeur de paramètre de commande correspondant ou liée à un couple moteur requis, la régénération du dispositif de traitement des gaz d'échappement agissant par inhibition de la combustion dépendant (205, 207) de la détermination de la valeur du paramètre de commande.

3. Procédé selon la revendication 2, dans lequel le nombre de cylindres où est inhibée la combustion dépend (205, 207) de la détermination de la valeur du paramètre de commande.

4. Procédé selon l'une quelconque des revendications précédentes, comprenant la commande de moyens de commande d'écoulement d'air (10) afin de commander la combustion dans le dispositif de traitement des gaz d'échappement (8) au cours de la régénération du dispositif de traitement des gaz d'échappement agissant par inhibition de la combustion.

5. Procédé selon la revendication 4, dans lequel la commande de la combustion dans le dispositif de traitement des gaz d'échappement (8) comprend la commande d'un emplacement ou d'une région à température maximale dans le dispositif de traitement des gaz d'échappement (8).

6. Procédé pour dispositif de traitement des gaz d'échappement (8) dans un système de moteur comprenant un moteur à combustion interne comprenant au moins quatre cylindres (2), des moyens d'injection de carburant (11) et des moyens d'allumage (16), le procédé comprenant la réalisation d'une régénération (208, 209, 223, 224, 225) du dispositif de traitement des gaz d'échappement agissant par inhibition de la combustion, comprenant l'inhibition de la combustion dans deux des cylindres (2), la régénération (208, 209, 223, 224, 225) du dispositif de traitement des gaz d'échappement agissant par inhibition de la combustion comprenant la commande des moyens d'injection de carburant (11), de sorte que du carburant est admis dans au moins un des cylindres (2) où est inhibée la combustion, et le procédé comprend en outre la détermination (221, 222) de la température du dispositif de traitement des gaz d'échappement (8), la commande du nombre de cylindres (2) où est admis du carburant pendant que la combustion est inhibée en fonction (223, 224) de la température du dispositif de traitement des gaz d'échappement, la commande de la quantité de carburant admise dans les cylindres (2) où est admis du carburant pendant que la combustion est inhibée, en fonction de la température du dispositif de traitement des gaz d'échappement et la commande des moyens d'allumage (16) au niveau des cylindres (2) de manière à inhiber la combustion, **caractérisé en ce que** :
- si la température du dispositif de traitement des gaz d'échappement (8) est inférieure à une troisième valeur seuil de température (T3), du carburant est injecté dans tous les cylindres où l'allumage est inhibé,
- si la température du dispositif de traitement des gaz d'échappement (8) est supérieure à la troisième valeur seuil de température (T3) et inférieure à une quatrième valeur seuil de température (T4), du carburant est injecté dans tous les cylindres où l'allumage est inhibé, sauf l'un d'eux, et
- si la température du dispositif de traitement des gaz d'échappement (8) est supérieure à la quatrième valeur seuil de température (8), aucun carburant n'est injecté dans aucun des cylindres où l'allumage est inhibé.

7. Système de moteur comprenant un moteur à combustion interne avec au moins quatre cylindres (2), des moyens d'injection de carburant et des moyens d'allumage (16), le système de moteur comprenant en outre un boîtier électronique de gestion moteur (9) adapté pour commander les moyens d'injection de carburant (11), le boîtier électronique de gestion moteur (9) étant adapté pour commander une régénération du dispositif de traitement des gaz d'échappement agissant par inhibition de la combustion, le boîtier électronique de gestion moteur (9) étant adapté pour inhiber, au cours de la régénération du dispositif de traitement des gaz d'échappement agissant par inhibition de la combustion, la combustion dans au moins un des cylindres (2), le boîtier électronique de gestion moteur (9) étant adapté pour commander, au cours de la régénération du dispositif de traitement des gaz d'échappement agissant par inhibition de la combustion, les moyens d'injection de carburant (11), de sorte que du carburant est admis dans au moins un des cylindres (2) où la combustion est inhibée, et le boîtier électronique de gestion moteur (9) est adapté pour déterminer la température du dispositif de traitement des gaz d'échappement (8), pour commander le nombre de cylindres (2) où du carburant est admis tandis que la combustion est inhibée en fonction de la température du dispositif de traitement des gaz d'échappement, et pour commander la quantité de carburant admise dans les cylindres (2) où du carburant est admis tandis que la combustion est inhibée, en fonction de la température du dispositif de traitement des gaz d'échappement, **caractérisé en ce que** le boîtier électronique de gestion moteur (9) inhibe, pendant la régénération du dispositif de traitement des gaz d'échappement agissant par inhibition de la combustion, la combustion dans tous les cylindres (2) du moteur à combustion interne en commandant les moyens d'allumage (16) de manière à inhiber la combustion et **en ce que** :
- si la température du dispositif de traitement des gaz d'échappement est inférieure à une première valeur seuil de température (T1), le boîtier électronique de gestion moteur (9) commande les moyens d'injection de carburant (11), de sorte que du carburant est injecté dans tous les cylindres où la combustion est inhibée,
- si la température du dispositif de traitement des gaz d'échappement est supérieure à la première valeur seuil de température (T1) et inférieure à une seconde valeur seuil de température (T2), le boîtier électronique de gestion moteur (9) commande les moyens d'injection de carburant (11), de sorte que du carburant est injecté dans tous les cylindres où l'inhibition est inhibée, sauf l'un d'eux,
- si la température du dispositif de traitement des gaz d'échappement est supérieure à la seconde valeur seuil de température (T2) et inférieure à une troisième valeur seuil de température (T3), le boîtier électronique de gestion moteur (9) commande les moyens d'injection de carburant (11), de sorte que du carburant est injecté dans tous les cylindres où l'allumage est inhibé, sauf deux d'entre eux,
- si la température du dispositif de traitement des gaz d'échappement est supérieure à la troisième valeur seuil de température (T3) et inférieure à une quatrième valeur seuil de température (T4), le boîtier électronique de gestion moteur (9) commande les moyens d'injection de carburant (11), de sorte que du carburant est injecté dans tous les cylindres où est inhibé l'allumage, sauf trois d'entre eux, et
- si la température du dispositif de traitement des gaz d'échappement est supérieure à la quatrième valeur seuil de température (T4), le boîtier électronique de gestion moteur (9) commande les moyens d'injection de carburant (11), de sorte qu'aucun carburant n'est injecté dans aucun des cylindres où est inhibé l'allumage.

8. Système de moteur selon l'une quelconque des revendications 6 ou 7, dans lequel le boîtier électronique de gestion moteur (9) est adapté pour déterminer, au cours de la régénération du dispositif de traitement des gaz d'échappement agissant par inhibition de la combustion, une valeur de paramètre de commande correspondant ou liée à un couple moteur requis et pour commander la régénération du dispositif de traitement des gaz d'échappement agissant par inhibition de la combustion en fonction de la valeur du paramètre de commande.

9. Système de moteur selon la revendication 8, dans lequel le boîtier électronique de gestion moteur (9) est adapté pour déterminer, au cours de la régénération du dispositif de traitement des gaz d'échappement agissant par inhibition de la combustion et en se basant sur la détermination de la valeur du paramètre de commande, le nombre de cylindres où est inhibée la combustion.

10. Système de moteur selon l'une quelconque des revendications 6 à 9, dans lequel le moteur comprend des moyens de commande d'écoulement d'air (10) pouvant être commandés par le boîtier électronique de gestion moteur (9), le boîtier électronique de gestion moteur (9) étant adapté pour commander les moyens de commande d'écoulement d'air (10) afin de commander la combustion dans le dispositif de traitement des gaz d'échappement (8) au cours de la régénération du dispositif de traitement des gaz d'échappement agissant par inhibition de la combustion.

11. Système de moteur selon la revendication 10, dans lequel le boîtier électronique de gestion moteur (9) est adapté pour commander les moyens de commande d'écoulement d'air (10) afin de commander un emplacement ou une région à température maximale dans le dispositif de traitement des gaz d'échappement (8).

12. Système de moteur comprenant un moteur à combustion interne avec au moins quatre cylindres (2), des moyens d'injection de carburant (11) et des moyens d'allumage (16), le système de moteur comprenant en outre un boîtier électronique de gestion moteur (9) adapté pour commander les moyens d'injection de carburant (11), le boîtier électronique de gestion moteur (9) étant adapté pour commander une régénération du dispositif de traitement des gaz d'échappement agissant par inhibition de la combustion, le boîtier électronique de gestion moteur (9) étant adapté pour inhiber, au cours de la régénération du dispositif de traitement des gaz d'échappement agissant par inhibition de la combustion, la combustion dans deux des cylindres (2), le boîtier électronique de gestion moteur (9) étant adapté pour commander, au cours de la régénération du dispositif de traitement des gaz d'échappement agissant par inhibition de la combustion, les moyens d'injection de carburant (11), de sorte que du carburant est admis dans au moins un des cylindres (2) où la combustion est inhibée, et le boîtier électronique de gestion moteur (9) est adapté pour déterminer la température du dispositif de traitement des gaz d'échappement (8), pour commander le nombre de cylindres (2) où du carburant est admis tandis que la combustion est inhibée en fonction de la température du dispositif de traitement des gaz d'échappement, pour commander la quantité de carburant admise dans les cylindres (2) où du carburant est admis tandis que la combustion est inhibée, en fonction de la température du dispositif de traitement des gaz d'échappement et pour commander les moyens d'allumage (16) de manière à inhiber la combustion, **caractérisé en ce que** :
- si la température du dispositif de traitement des gaz d'échappement est inférieure à une troisième valeur seuil de température (T3), le boîtier électronique de gestion moteur (9) commande les moyens d'injection de carburant (11), de sorte que du carburant est injecté dans tous les cylindres où est inhibé l'allumage,
- si la température du dispositif de traitement des gaz d'échappement est supérieure à la troisième valeur seuil de température (T3) et inférieure à une quatrième valeur seuil de température (T4), le boîtier électronique de gestion moteur (9) commande les moyens d'injection de carburant (11), de sorte que du carburant est injecté dans tous les cylindres où est inhibé l'allumage, sauf l'un d'eux,
- et si la température du dispositif de traitement des gaz d'échappement est supérieure à la quatrième valeur seuil de température (T4), le boîtier électronique de gestion moteur (9) commande les moyens d'injection de carburant (11), de sorte qu'aucun carburant n'est injecté dans aucun des cylindres où est inhibé l'allumage.
